# NEUE EUROPÄISCHE PATENTSCHRIFT

(11) **EP 2 368 692 B2**
(45) Veröffentlichungstag und Bekanntmachung des Hinweises auf die Entscheidung über den Einspruch: **21.02.2024**
(45) Hinweis auf die Patenterteilung: 18.05.2016
(21) Anmeldenummer: 11159316.6
(22) Anmeldetag: 23.03.2011
(51) Int. Cl.: B29C 49/56

(54) **Blasformanordnung mit kontrolliertem Verriegelungsmechanismus**
Blow moulding assembly with controlled locking mechanism
Dispositif de moulage par soufflage doté d'un mécanisme de verrouillage contrôlé

(30) Priorität: 26.03.2010 DE 102010013185
(43) Veröffentlichungstag der Anmeldung: 28.09.2011
(73) Patentinhaber: Krones AG, 93073 Neutraubling (DE)
(72) Erfinder: Spitzer, Thomas, 93109, Wiesent (DE)
(74) Vertreter: Bittner, Bernhard

(56) Entgegenhaltungen:
- EP-A2- 2 149 446
- DE-A1-102008 063 939
- DE-U1-202008 016 838
- FR-A1- 2 646 802
- US-A1- 2006 275 525

## Beschreibung

Die vorliegende Erfindung bezieht sich auf eine Vorrichtung zum Umformen von Kunststoffvorformlingen zu Kunststoffbehältnissen. Diese Vorrichtungen sind aus dem Stand der Technik seit langem bekannt. Üblicherweise weisen derartige Vorrichtungen eine Vielzahl von Blasstationen auf, in deren Innerem eine Blasform angeordnet ist, wobei die Kunststoffvorformlinge gegen eine Innenwandung dieser Blasform insbesondere durch Beaufschlagen mit Druckluft expandiert werden. Die Blasformen sind dabei üblicherweise an Blasformträgern angeordnet, wobei diese Blasformträger zum Öffnen der Blasform auseinandergeklappt werden können.

Während des eigentlichen Expansionsvorgangs werden dabei diese Formhälften gegeneinander verriegelt, sodass sie sich während des eigentlichen Umformvorgangs nicht öffnen können.

Diese Verriegelungsmechanismen werden dabei im Stand der Technik zum Teil durch Führungskurven gesteuert, welche insbesondere stationär angeordnet sind, und an welchen Kurvenrollen abrollen, sodass durch die Gestaltung der Führungskurve zu vorgegebenen Zeitpunkten die Blasform verriegelt, oder auch entriegelt werden kann.

Aus der US 7,377,766 B2 ist eine Blasformvorrichtung zum Herstellen von Kunststoffbehältnissen bekannt. Diese Vorrichtung weist einen Verriegelungsmechanismus auf, wobei zwei Verriegelungsmittel vorgesehen sind, die an den beiden Blasformhälften angeordnet sind.

Dabei weist jedes dieser Verriegelungselemente eine Vielzahl von hakenförmigen Fingern auf, die jeweils in das zweite Element eingreifen können.

Die DE 103 18 596 A1 beschreibt ein Verfahren auf einer Vorrichtung zur Blasformung von Behältern. Dabei ist eine aus zwei Blasformsegmenten bestehende Blasform mit einem Verriegelungselement zur Durchführung einer Verriegelung vorgesehen, wobei diese Verriegelung quer zu einer Trennebene der Blasformsegmente besteht. Dabei kann das Verriegelungselement in horizontaler Richtung verschwenkt werden.

Die US-A-20060275525 offenbart eine Blasformanordnung gemaß dem Oberbegriff des Anspruchs 1.

Die oben erwähnten Führungskurven arbeiten zufriedenstellend. Gleichwohl tritt gelegentlich das Problem auf, dass die Verriegelung noch nicht vollständig bewirkt wurde, was zu Unsicherheiten in einem Arbeitsvorgang führt. Gleiches gilt auch für die Entriegelung, welche Voraussetzung für das Entnehmen des Kunststoffbehältnisses ist.

Der vorliegenden Erfindung liegt die Aufgabe zugrunde, den Verriegelungs- und Entriegelungsprozess für derartige Blasformanordnungen zu verbessern. Dabei sollen bevorzugt einfache und kostengünstige Mittel eingesetzt werden, um dies zu erreichen.

Diese Aufgabe wird erfindungsgemäß durch den Gegenstand des unabhängigen Anspruchs erreicht. Vorteilhafte Ausführungsformen und Weiterbildungen sind Gegenstand der Unteransprüche.

Eine Blasformanordnung zum Umformen von Kunststoffvorformlingen zu Kunststoffbehältnissen weist ein erstes Formträgerelement auf, sowie ein zweites Formträgerelement, welches gegenüber dem ersten Formträgerelement um eine Verbindungsachse schwenkbar ist. Dabei wirken die Formträgerelemente derart zusammen, dass sie in einem geschlossenen Zustand der Blasformanordnung in ihrem Inneren einen Hohlraum ausbilden, in dem die Kunststoffvorformlinge zu Kunststoffbehältnissen expandierbar sind. Weiterhin ist eine Verriegelungseinrichtung vorgesehen, welche das erste Formträgerelement gegenüber dem zweiten Formträgerelement verriegelt, um die Blasformanordnung wenigstens zeitweise in einem geschlossen Zustand zu halten.

Dabei weist die Verriegelungseinrichtung mindestens ein an einem Formträgerelement angeordnetes Verriegelungselement auf, welches bewegbar und insbesondere gegenüber dem Formträgerelement bewegbar ist, und welches zum Verriegeln der Formträgerelemente mit dem zweiten Formträgerelement (bzw. einem an diesem angeordneten zweiten Verriegelungselement) zusammenwirkt. Dabei weist die Verriegelungseinrichtung ein bewegliches Betätigungselement auf, dessen Bewegung wenigstens zeitweise mit einer Bewegung des Verriegelungselements gekoppelt ist, wobei das Betätigungselement und/oder das Verriegelungselement zumindest zwischen zwei vorgegebenen Positionen bewegbar ist.

Erfindungsgemäß weist die Verriegelungseinrichtung eine in der Blasformanordnung angeordnete Führungseinrichtung auf, welche derart mit dem Verriegelungselement und/oder dem Betätigungselement zusammenwirkt, dass das Verriegelungselement und/oder das Betätigungselement in eine der beiden Positionen gedrängt wird.

Unter einer zeitweisen Kopplung der Bewegungen wird verstanden, dass eine Bewegung des Betätigungselements zumindest mittelbar, bevorzugt unmittelbar zu einer Bewegung des Verriegelungselements führt.

Es wird daher erfindungsgemäß vorgeschlagen, dass eine Führungs- bzw. Drängeinrichtung vorgesehen ist, welche das Verriegelungselement und/oder das Betätigungselement in eine bestimmte der genannten Positionen drängt. Bei dieser Führungseinrichtung handelt es sich dabei nicht um die ohnehin vorgesehene stationäre Führungskurve, sondern um eine zusätzliche Führungseinrichtung, welche je nach Position des Betätigungselementes dieses in genau eine der beiden vordefinierten Positionen drängt. Auf diese Weise kann sichergestellt werden, dass die Verriegelungseinrichtung stets in einem definierten Zustand, d.h. vollständig verriegelt oder entriegelt ist. Zwischenstellungen werden durch diese Vorgehensweise vermieden.

Vorzugsweise bewirkt die Führungseinrichtung, dass das Betätigungselement in eine der beiden Positionen gedrängt wird. Diese beiden Positionen des Betätigungselements ziehen jedoch bevorzugt über die Kopplung entsprechende Verriegelungs- oder Entriegelungspositionen des Verriegelungselements nach sich.

Vorteilhaft nehmen die beiden Formträgerelemente jeweils Blasformhälften auf, die im Inneren den oben erwähnten Hohlraum ausbilden. Daneben kann auch noch eine Bodenform vorgesehen sein, welche den besagten Hohlraum nach unten hin abschließt. In diesem Hohlraum werden die Kunststoffvorformlinge insbesondere durch Beaufschlagen mit Druckluft zu Kunststoffbehältnissen expandiert. Damit wird eine entsprechende Blasform vorteilhaft durch die beiden Formträgerelemente gehaltert. Daneben weist die Vorrichtung bevorzugt auch eine Düseneinrichtung auf, um die Kunststoffvorformlinge mit einem fließfähigen Medium und insbesondere mit Druckluft zu beaufschlagen.

Das Verriegelungselement selbst kann in unterschiedlicher Weise ausgebildet sein. So kann es sich beispielsweise um eine drehbare Welle handeln, welche sich parallel zu der oben erwähnten Verbindungsachse der Formträgerelemente erstreckt und welche je nach ihrer Drehstellung die Blasform verriegelt oder entriegelt. Ein Beispiel für ein derartiges Verriegelungselement ist aus der EP 1276 589 B1 bekannt. Der Gegenstand der EP 1 276 598 B1 wird durch Bezugnahme zum Gegenstand der vorliegenden Anmeldung gemacht.

So könnte an einem Formträgerelement ein Verriegelungselement vorgesehen sein, welches mit einem an dem anderen Formträgerelement angeordneten Gegenelement zusammenwirkt, um die beiden Formträgerelemente gegeneinander zu verriegeln. Wie gesagt kann dieses Gegenelement oder auch das Verriegelungselement dabei zwischen einer Verriegelungsposition in der die Blasform verriegelt ist und einer Entriegelungsposition, in der die Blasform geöffnet ist, bewegt werden. Es kann zudem drehbar gelagert sein, beispielsweise in der Verriegelungsposition teilweise an dem Verriegelungselement anliegen und in der Entriegelungsposition das Verriegelungselement freigeben.

Das Betätigungselement kann dabei beispielsweise direkt an dem Verriegelungselement angelenkt bzw. mit diesem verbunden sein, sodass eine Bewegung des Betätigungselements unmittelbar an eine Bewegung des Verriegelungselements gekoppelt ist. Es wäre jedoch auch möglich, dass das Betätigungselement beispielsweise um eine andere Achse schwenkbar ist als das Verriegelungselement und durch entsprechende Kraftübertragungsmechanismen eine Bewegung des Betätigungselements eine entsprechende Bewegung des Verriegelungselements nach sich zieht. Vorteilhaft handelt es sich bei dem Betätigungselement um einen Hebel, der bevorzugt um eine vorgegebene Schwenkachse schwenkbar ist.

Vorteilhaft sind die Formträgerelemente in einer der beiden Positionen des Betätigungselements und/oder des Verriegelungselements in einem verriegelten Zustand und in der anderen der beiden Positionen des Betätigungselements in einem entriegelten Zustand. Vorteilhaft handelt es sich bei den beiden Positionen um Endpositionen bzw. Schaltstellungen, durch welche die Bewegung des Betätigungselements gekennzeichnet ist. Die Führungseinrichtung weist eine Kurveneinrichtung mit einer gekrümmten Außenoberfläche auf, deren Bewegung mit einer Bewegung des Betätigungselements gekoppelt ist. Durch die Verwendung dieser Kurveneinrichtung, die beispielsweise gemeinsam mit dem Betätigungselement schwenkbar sein kann, können aufgrund der gekrümmten Außenoberfläche bevorzugte Stellungen dieser Führungseinrichtung und damit auch bevorzugte Stellungen des damit gekoppelten Betätigungselements erreicht werden.

Die Blasformanordnung weist eine weitere, insbesondere stationär angeordnete, Führungskurve auf, welche das Betätigungselement (insbesondere bei Bewegung derselben) bewegt.

Vorteilhaft ist eine Position der Kurveneinrichtung gegenüber dem Betätigungselement veränderbar. Durch diese Veränderung können die Endpositionen des Betätigungselements eingestellt werden.

Bei einer weiteren vorteilhaften Ausführungsform weist die Kurveneinrichtung wenigstens zwei (insbesondere voneinander trennbare) Kurvenelemente auf, deren Relativpositionen bevorzugt zueinander veränderbar sind. Auf diese Weise ist es möglich, die oben genannten beiden Positionen des Betätigungselements bzw. des Verriegelungselements (auch relativ zueinander) zu verändern.

Bei einer weiteren vorteilhaften Ausführungsform weist die Führungseinrichtung ein Kraftausübungselement auf, welches die Kurveneinrichtung zumindest zeitweise und bevorzugt permanent kontaktiert. Durch diesen Kontakt kann dabei die Führungseinrichtung bzw. auch die beiden oben erwähnten Kurvenelemente in eine bestimmte Stellung gedrängt werden.

Bei einer weiteren vorteilhaften Ausführungsform übt das Kraftausübungselement eine Kraft auf das Kurvenelement bzw. die Kurveneinrichtung aus, welche eine Komponente aufweist, welche senkrecht zu der Außenoberfläche des Kurvenelements steht. Durch diese Kraftausübung kann in Verbindung mit der gekrümmten Oberfläche der Kurveneinrichtung das Kurvenelement in eine bestimmte Position gedrängt werden.

Vorteilhaft weist die Krümmung der Außenoberfläche der Kurveneinrichtung in ihrer Gesamtheit variierende Krümmungsradien auf und insbesondere auch einander dem Vorzeichen nach entgegengesetzte Krümmungen.

Bei einer weiteren vorteilhaften Ausführungsform weist die Blasformanordnung wenigstens ein Federelement auf, welches das Kraftausübungselement in Richtung der Führungseinrichtung vorspannt. Auf diese Weise kann das Führungselement und damit auch das Betätigungselement in eine vorbestimmte Position gedrängt werden.

Bei einer weiteren vorteilhaften Ausführungsform weist die Außenoberfläche des Führungselements zwei voneinander beabstandete Mulden auf, welche das Kraftausübungselement kontaktieren kann. Dabei befindet sich das Betätigungselement vorteilhaft in der ersten Position, wenn das Kraftausübungselement in der ersten Mulde angeordnet ist und das Betätigungselement befindet sich vorteilhaft in der zweiten Position, wenn das Kraftausübungselement in der zweiten Mulde angeordnet ist. Bei dieser Ausführungsform werden durch das Zusammenwirken des Kraftausübungselements und der Führungseinrichtung zwei definierte Stellungen und insbesondere Endstellungen festgelegt. Dabei ist es möglich, dass die erste Mulde von dem ersten Kurvenelement ausgebildet wird und die zweite Mulde von dem zweiten Kurvenelement. Auf diese Weise ist es auch möglich, die Abstände der beiden Mulden zueinander zu verändern, um hierdurch auch die beiden Endstellungen des Betätigungselements gegeneinander zu verändern.

Bei einer weiteren vorteilhaften Ausführungsform ist das Kraftausübungselement an einem schwenkbaren Hebel angeordnet. Auf diese Weise ist ein Lösen des Kraftausübungselements bzw. ein Herausziehen des Elements aus den jeweiligen Mulden möglich. Dabei ist es möglich, dass dieser schwenkbare Hebel an einem Formträgerelement angeordnet ist und insbesondere an dem Formträgerelement, an dem sich auch die Verriegelungseinrichtung befindet. Vorteilhaft ist die Position des Kraftausübungselements in der Position, in der es an dem Führungselement anliegt konstant, sodass hier genau zwei Endpositionen des Führungselements zugelassen werden.

Bei einer weiteren vorteilhaften Ausführungsform ist das Kraftausübungselement bezüglich einer vorgegebenen Achse drehbar. Auf diese Weise kann das Kraftausübungselement gegenüber dem Führungselement abrollen.

In einer weiteren vorteilhaften Ausführungsform weist die Verriegelungseinrichtung ein mit dem Betätigungselement gemeinsam bewegliches Stellglied auf, welches derart mit einer Schrägfläche des Verriegelungselements zusammenwirkt, dass durch eine Bewegung des Stellglieds eine Bewegung des Verriegelungselements bewirkt wird. So ist es beispielsweise möglich, dass an dem Betätigungselement ein Zapfen angeordnet ist, der in einer Führungsnut gleitet, die wiederum an der Verriegelungseinrichtung vorgesehen ist. Durch die Bewegung dieses Zapfens gegenüber der Führungsnut kann auch eine gezielte Bewegung der Verriegelungseinrichtung erreicht werden.

Weitere vorteilhafte Ausführungsformen ergeben sich aus den beigefügten Zeichnungen.

Darin zeigen:
- Fig. 1: eine Darstellung einer Blasformanordnung;
- Fig. 2: eine detailliertere Darstellung eines Formträgers;
- Fig. 3: eine Seitenansicht der Vorrichtung aus Fig. 2;
- Fig. 4: eine perspektivische Darstellung eines Betätigungselements;
- Fig. 5: eine Draufsicht von Hinten auf das Betätigungselement aus Fig. 4;
- Fig. 6a - 6d: vier Darstellungen zur Veranschaulichung der Betätigung des Verriegelungselements; und.
- Fig. 7: eine weitere Ausführungsform einer erfindungsgemäßen Vorrichtung

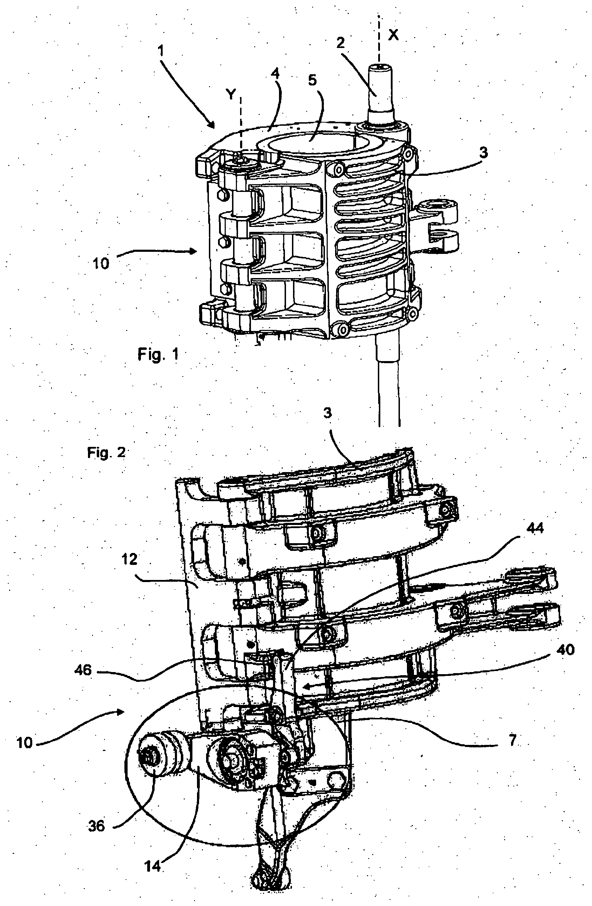

Fig. 1 zeigt eine Teilansicht einer Blasform. Diese Blasform 1 weist zwei um eine Verbindungsachse 2 drehbare als Formträger dienende Formträgerelemente 3,4 auf, genauer ein erstes Formträgerelement 3 und ein zweites Formträgerelement 4. Diese beiden Formträgerelemente 3, 4 sind derart ausgestaltet, dass sie in einem verschlossenen Zustand einen inneren Hohlraum 5 bilden, in dem mittels (nicht gezeigter) Formeinsätzen (bzw. einer Blasform) ein (nicht gezeigter) Vorformling in einem Streckblasprozess formgeblasen, das heißt auskonturiert, werden kann.

Zum Verschließen der beiden Formträgerelemente 3, 4 werden diese um die Verbindungsachse 2 so geschwenkt, dass deren beide seitliche Flächen aneinanderstoßen. In Fig. 1 ist ein geschlossener verriegelter Zustand der beiden Formhälften 3, 4 dargestellt. Das Bezugszeichen 10 bezieht sich auf eine Verriegelungseinrichtung, welche gedreht werden kann, um die beiden Formhälften 3, 4 miteinander zu verriegeln.

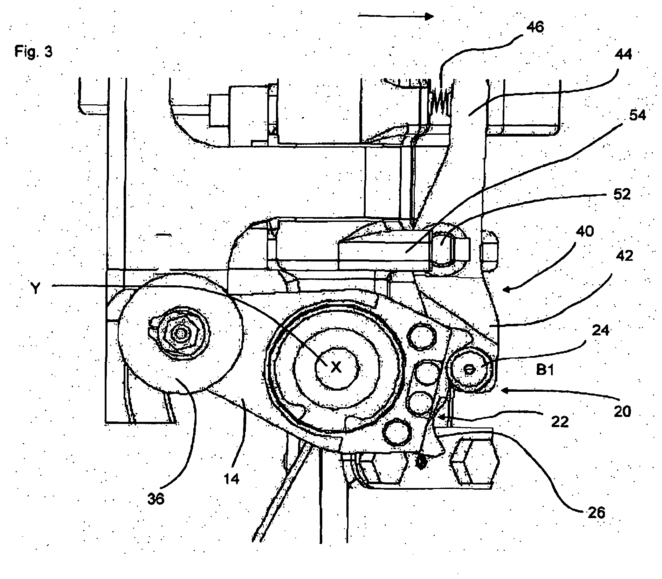

Fig. 2 zeigt eine Detailansicht einer erfindungsgemäßen Blasformanordnung. Man erkennt, dass hier an dem Formträgerelement 3 ein Betätigungselement 14 in Form eines schwenkbaren Hebels angeordnet ist. Dieses Betätigungselement ist dabei um eine Achse Y (vgl. Fig. 3) schwenkbar. Das Bezugszeichen 7 kennzeichnet (nur teilweise dargestellt) ein Bodenelement, welches von unten an das Formträgerelement herangeführt werden kann, um eine Blasform auch nach unten hin zu schließen. Das Bezugszeichen 12 bezieht sich auf ein Verriegelungselement, das zum Verriegeln mit einem zweiten Verriegelungskörper 16, der an dem (nicht gezeigtem) zweiten Formträgerelement 4 angeordnet ist, dient. Das Bezugszeichen 10 bezieht sich in seiner Gesamtheit auf die Verriegelungseinrichtung. Eine Kurvenrolle 36 kann gegenüber einer (nicht gezeigten) stationär angeordneten Führungskurve abrollen, wodurch je nach Position dieser Führungskurve das Betätigungselement 14 geschwenkt wird. Durch ein Schwenken dieses Betätigungselements 14 kann die Verriegelungseinrichtung 10 ebenfalls betätigt werden, und so die Verriegelung freigeben.

Das Bezugszeichen 44 bezieht sich auf einen Hebelarm, der Bestandteil eines Hebels 40 ist, der wiederum an dem Formträgerelement 3 angelenkt ist.

Fig. 3 zeigt eine Seitendarstellung der in der Fig. 2 gezeigten Vorrichtung. Auch hier erkennt man wieder das Betätigungselement 14 mit der Kurvenrolle 36. Man erkennt, dass an dem Betätigungselement 14 eine Kurveneinrichtung 22 angeordnet ist. Diese Kurveneinrichtung weist dabei eine Außenoberfläche 26 auf, welche mit einem Kraftübertragungselement 24 zusammenwirkt. Dieses Kraftausübungselement 24 ist dabei als Rolle ausgeführt, die drehbar an dem Hebel 40 bzw. dem unteren Hebelarm 42 dieses Hebels angeordnet ist. Durch diese Drehbarkeit kann das Kraftausübungselement 24 gegenüber der Außenoberfläche 26 abrollen. Das Bezugszeichen 20 kennzeichnet in seiner Gesamtheit die Führungseinrichtung, welche die Kurveneinrichtung 22 und das Kraftausübungselement 24 aufweist.

Das Bezugszeichen 54 bezieht sich auf einen Träger, an dem der Hebel 40 mittels einer Welle 52 schwenkbar gelagert ist. Ein oberer Hebelarm 44 des Hebels 40 wird mittels einer Federungseinrichtung 46 in Richtung des Pfeils P gedrängt, sodass das an dem anderen Arm 42 angeordnete Kraftausübungselement auf die Kurveneinrichtung 22 zugedrückt wird. Auf diese Weise wird die Kraftausübungseinrichtung 24 gegenüber dem Betätigungselement 14 vorgespannt.

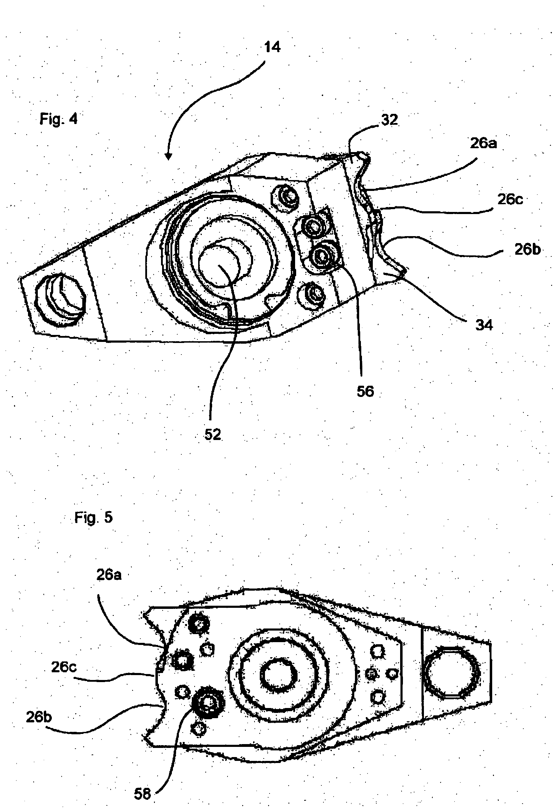

Fig. 4 zeigt eine perspektivische Darstellung des Betätigungselements 14. Man erkennt, dass an dem Betätigungselement 14 zwei Kurvenelemente 32 und 34 entlang der Achse Y übereinander angeordnet sind, wobei das Kurvenelement 32 eine erste Mulde 26a und das zweite Kurvenelement 34 eine zweite Mulde 26b ausbildet. In einem zentralen Bereich 26c gehen die beiden Kurvenelemente 32, 34 derart ineinander über, dass möglichst wenige Kanten bzw. Abschrägungen entstehen. Auf diese Weise wird ein Übergang des Kraftübertragungselements von der ersten Mulde 26a in die zweite Mulde 26b oder umgekehrt vereinfacht.

Diese beiden Mulden 26a und 26b legen gleichzeitig die Positionen fest, in denen das in Figur 3 gezeigte Kraftausübungselement einrasten kann. Auf diese Weise werden zwei Positionen und insbesondere Endpositionen des Betätigungselements 14, welches mittels einer Welle 42 schwenkbar ist, festgelegt. Bei der in Fig. 3 gezeigten Situation befindet sich das Betätigungselement in einer Position B1. Falls das Kraftausübungselement 24 in der unteren Mulde 26b angeordnet ist, befindet sich das Betätigungselement 14 in der Position B2 (nicht gezeigt). Das Bezugszeichen 56 bezieht sich auf Schraubeinrichtungen, mit denen die Kurvenelemente 32 und 34 an dem Betätigungselement 14 drehfest arretiert sind. Gleichwohl ist es möglich, die beiden Kurvenelemente 32 und 34 nach Lösen der Schraubeneinrichtung gegeneinander zu verschieben, sodass der Abstand der beiden Mulden 26a und 26b geändert werden kann.

Fig. 5 zeigt eine Rückseite des Betätigungselements 14. Auch hier erkennt man wieder die beiden Mulden 26a und 26b und den Zwischenbereich 26c, der zwischen diesen Beiden Mulden 26a und 26b angeordnet ist. Das Bezugszeichen 58 bezieht sich auf eine zusätzliche Klemmschraube, mit der die Position der beiden Führungselemente 32 und 34 fixiert werden kann.

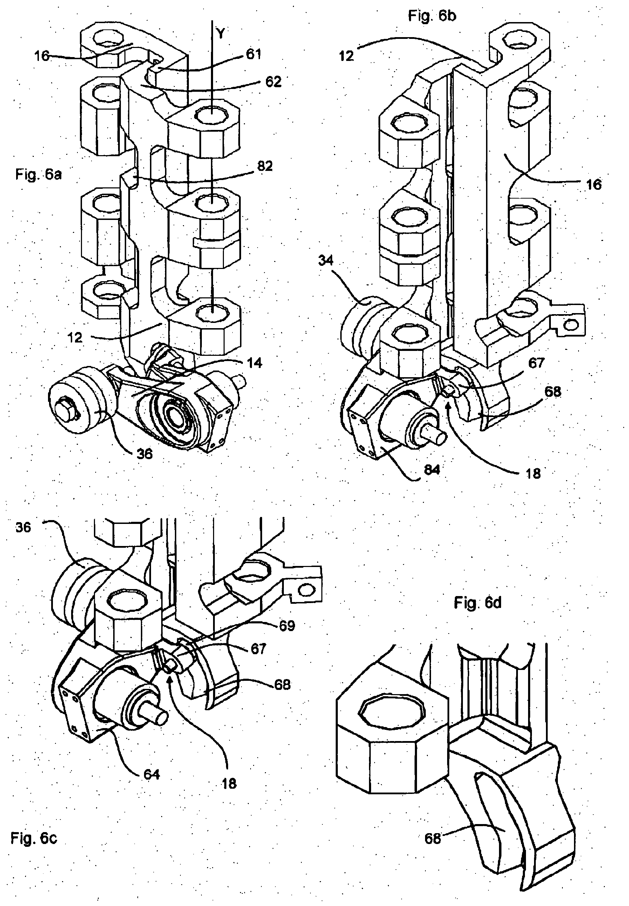

Die Fig. 6a - 6d zeigen eine weitere Ausführungsform eines erfindungsgemäßen Mechanismus. Dabei ist hier wiederum eine Kurvenrolle 36, genauer, eine doppelte Kurvenrolle 36 vorgesehen, die an einer (nicht gezeigten) Kurvenbahn entlang läuft. An dieser Kurvenrolle 36 ist ein Hebel 14 angeordnet, der durch eine Bewegung der Kurvenrolle in Drehung versetzt wird. Fest an diesem Hebel 14 angeordnet ist ein Eingriffselement 18, welches ein Schwenken des Verriegelungselements 12 um die Achse Y bewirkt.

Durch ein Schwenken des Verriegelungselements 12 kann ein Eingriff zwischen Haken 62 und entsprechenden Gegenhaken 61 hergestellt oder gelöst werden. In Fig. 6c ist der Eingriffsmechanismus genauer erläutert. Der Hebel 14 ist, wie gesagt, schwenkbar an einem festen Träger 64 angeordnet. Die in den vorangegangenen Figuren gezeigte Führungseinrichtung 20 ist hier nicht dargestellt.

Weiterhin ist an dem Hebel 14 ein Eingriffskörper bzw. ein Stellglied 18, genauer gesagt, eine an einem Rollenträger 67 angeordnete Rolle 69 vorgesehen, welche in einer Nut 68, welche an bzw. in dem Verriegelungselement 12 ausgebildet ist, verläuft. Dabei handelt es sich bei der Nut 68 um eine dreidimensionale Nut und eine Bewegung der Rolle 69 in dieser Nut 68 führt zu einem Schwenken der Verriegelungselemente 12 um die Achse Y. Man erkennt, dass die Nut 68 einen gekrümmten Verlauf aufweist und die Rolle 69 ohne Verkantungen in dieser Nut 68 abrollen kann. Bevorzugt ist eine Nutbreite der Nut 68 geringfügig größer als ein Durchmesser der Rolle 69. Die an ihren Träger 67 angeordnete Rolle bildet in ihrer Gesamtheit ein Stellglied zum Bewegen des Verriegelungselements 12.

Der andere Haken bzw. das Verriegelungselement 16 sind bei der in den Fig. 6a - 6d gezeigten Ausführungsform nicht schwenkbar, es wäre jedoch auch möglich, beide Haken zum Öffnen bzw. Schließen der Blasform zu verschwenken. Damit ist bei dieser Ausführungsform direkt in dem Verriegelungselement eine Kurve 68 zum Öffnen und Schließen der Blasform integriert. Die Kurve zum Bewegen der Rolle 36 wird wiederum bevorzugt von einer zur Maschine festen Kurve gesteuert, wenn die Blasstationen im Rundlauf an dieser Kurve vorbeikommen. Weiterhin wäre es auch denkbar, dass in den Bewegungsablauf zwischen der Rolle 36 und dem Verriegelungselement 12 eine Rutschkupplung integriert ist, mit welcher auf ein Verklemmen der Haken 62 und 61 reagiert werden kann.

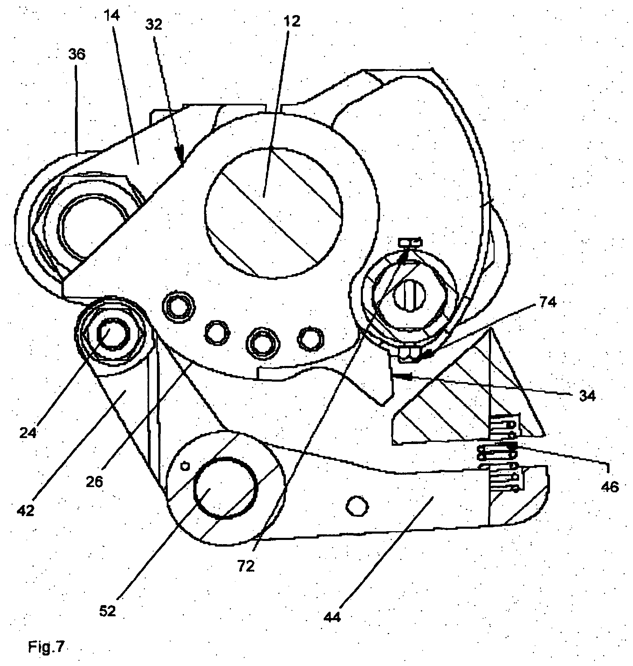

Fig. 7 zeigt eine weitere Ausführungsform der vorliegenden Erfindung. Bei dieser Gestaltung ist das Betätigungselement 14 mit der Kurvenrolle 36 direkt an der Verriegelungsrichtung 12 angelenkt bzw. drehfest mit dieser gekoppelt. Auch die Führungseinrichtung 22 bzw. die beiden Kurvenelemente 32 und 34 sind hier direkt an der Verriegelungseinrichtung 12 angeordnet. Daneben ist auch hier wieder das Kraftausübungselement 24 erkennbar, welches hier in einer der beiden Mulden, nämlich der Mulde, welche durch das Kurvenelement 32 ausgebildet wird, angeordnet ist. Die Bezugszeichen 72 und 74 beziehen sich auf Stellmittel bzw. Stellschrauben, mit denen die Position der beiden Führungselemente 32, 34 gegenüber dem Betätigungselement 14 bzw. auch die Relativposition der beiden Führungselemente 32, 34 zueinander geändert werden kann.

Die Anmelderin behält sich vor, sämtliche in den Anmeldungsunterlagen offenbarte Merkmale als erfindungswesentlich zu beanspruchen, sofern sie einzeln oder in Kombination gegenüber dem Stand der Technik neu sind.

### Bezugszeichenliste

- 1: Blasformanordnung
- 2: Verbindungsachse
- 3: erste Formhälfte, Formträgerelement
- 4: zweite Formhälfte, Formträgerelement
- 5: Hohlraum
- 7: Bodenelement
- 10: Verriegelungseinrichtung
- 12: Verriegelungseinrichtung
- 14: Betätigungselement
- 16: zweiter Verriegelungskörper
- 22: Kurveneinrichtung
- 24: Kraftübertragungselement, Kraftausübungseinrichtung
- 26: Außenoberfläche
- 26a: erste Mulde
- 26b: zweite Mulde
- 26c: zentraler Bereich
- 32, 34: Kurvenelement
- 36: Kurvenrolle
- 40: Hebel
- 42: Hebelarm, Welle
- 44: Hebelarm
- 46: Federungseinrichtung
- 52: Welle
- 54: Träger
- 56: Schraubeneinrichtungen
- 58: Klemmschraube
- 61: Gegenhaken
- 62: Haken
- 64: Träger
- 67: Rollenträger
- 68: Nut, Kurve
- 69: Rolle
- 72, 74: Stellmittel
- B1: Position
- B2: Position
- P: Pfeil
- X: Verbindungsachse
- Y: Achse

## Patentansprüche

1. Blasformanordnung (1) zum Umformen von Kunststoffvorformlingen zu Kunststoffbehältnissen mit einem ersten Formträgerelement (3) und einem zweiten Formträgerelement (4), Welches gegenüber dem ersten Formträgerelement (3) um eine Verbindungsachse (X) schwenkbar ist, wobei die Formträgerelemente (3, 4) derart zusammenwirken, dass sie in einem geschlossenen Zustand der Blasformanordnung (1) in ihrem Inneren einen Hohlraum (5) ausbilden, in dem die Kunststoffvorformlinge zu Kunststoffbehältnissen expandierbar sind, und mit einer Verriegelungseinrichtung (10), welche das erste Formträgerelement (3) gegenüber dem zweiten Formträgerelement (4) verriegelt, um die Blasformanordnung (1) wenigstens zeitweise in einem geschlossenen Zustand zu halten, wobei die Verriegelungseinrichtung (10) mindestens ein an einem Formträgerelement (3, 4) angeordnetes Verriegelungselement (16) aufweist, welches bewegbar ist und welches zum Verriegeln der Formträgerelemente (3, 4) mit dem anderen Formträgerelement (4, 3) zusammenwirkt und wobei die Verriegelungseinrichtung (10) ein bewegliches Betätigungselement (14) aufweist, dessen Bewegung wenigstens zeitweise mit einer Bewegung des Verriegelungselements (16) gekoppelt ist, wobei das Betätigungselement oder das Verriegelungselement (16) zumindest zwischen zwei vorgegebenen Positionen (B1, B2) bewegbar ist,
**dadurch gekennzeichnet, dass**
die Verrieglungseinrichtung (10) neben einer ohnehin vorgesehenen stationären Führungskurve eine an der Blasformanordnung (1) angeordnete zusätzliche Führungseinrichtung (20) aufweist, welche derart mit dem Verriegelungselement (12) oder dem Betätigungselement (14) zusammenwirkt, dass das Verriegelungselement (12) oder das Betätigungselement (14) je nach Position des Betätigungselementes in genau eine der beiden Positionen (B1, B2) gedrängt wird, so dass sichergestellt werden kann, dass die Verriegelungseinrichtung (10) stets in einem definierten Zustand, d.h. vollständig verriegelt oder entriegelt ist, wobei die Führungseinrichtung (20) eine Kurveneinrichtunct (22) mit einer gekrümmten Außenoberfläche (26) aufweist, deren Bewegung mit einer Bewegung des Betätigungselements (14) gekoppelt ist.

2. Blasformanordnung nach Anspruch 1,
**dadurch gekennzeichnet, dass**
in einer der beiden Positionen (B1) des Betätigungselements (14) die Formträgerelemente in einem verriegelten Zustand sind und in der anderen der beiden Positionen (B2) des Betätigungselements (14) die Formträgerelemente (3, 4) in einem entriegelten Zustand sind.

3. Blasformanordnung nach Anspruch 1,
**dadurch gekennzeichnet, dass**
eine Position der Kurveneinrichtung (22) gegenüber dem Betätigungselement (14) veränderbar ist.

4. Blasformanordnung nach Anspruch 1,
**dadurch gekennzeichnet, dass**
die Kurveneinrichtung (22) wenigstens zwei Kurvenelemente (32, 34) aufweist, deren Relativposition zueinander veränderbar ist.

5. Blasformanordnung nach Anspruch 1,
**dadurch gekennzeichnet, dass**
die Führungseinrichtung (20) ein Kraftausübungselement (24) aufweist, welches die Kurveneinrichtung (22) kontaktiert

6. Blasformanordnung nach Anspruch 5,
**dadurch gekennzeichnet, dass**
das Kraftausübungselement (24) eine Kraft auf die Kurveneinrichtung (22) ausübt, welche Kraft eine Komponente aufweist, welche senkrecht zu der Außenoberfläche (26) der Kurveneinrichtung (22) steht.

7. Blasformanordnung nach wenigstens einem der vorangegangenen Ansprüche 1-6
**dadurch gekennzeichnet, dass**
die Außenoberfläche (26) zwei voneinander beabstandete Mulden (26a, 26b) aufweist, welche das Kraftausübungselement (24) kontaktieren kann, wobei sich das Betätigungselement (14) in der ersten Position (B1) befindet, wenn das Kraftausübungselement (24) in der ersten Mulde (26a) angeordnet ist und sich das Betätigungselement (14) in der zweiten Position (B2) befindet, wenn das Kraftausübungselement (24) in der zweiten Mulde (26b) angeordnet ist.

8. Blasformanordnung nach wenigstens einem der vorangegangenen Ansprüche 5 - 7,
**dadurch gekennzeichnet, dass**
das Kraftausübungselement (24) an einem schwenkbaren Hebel (40) angeordnet ist.

9. Blasformanordnung nach wenigstens einem der vorangegangenen Ansprüche,
**dadurch gekennzeichnet, dass**
die Verriegelungseinrichtung ein mit dem Betätigungselement (14) gemeinsam bewegliches Stellglied (18) aufweist, welches derart mit einer Schrägfläche des Verriegelungselements (12) zusammenwirkt, dass durch eine Bewegung des Stellglieds eine Bewegung des Verriegelungselements (12) bewirkt wird.

## Claims

1. Blow moulding arrangement (1) for shaping plastics material preforms into plastics material containers with a first mould carrier element (3) and a second mould carrier element (4) which is swivelable about a connecting axis (X) in relation to the first mould carrier element (3), wherein the mould carrier elements (3, 4) cooperate such that in a closed state of the blow moulding arrangement (1) they form in their interior a cavity (5) in which the plastics material preforms can be expanded into plastics material containers, and with a locking device (10) which locks the first mould carrier element (3) in relation to the second mould carrier element (4) in order to hold the blow moulding arrangement (1) at least temporarily in a closed state, wherein the locking device (10) has at least one locking element (16) which is arranged on a mould carrier element (3, 4) and is mobile and cooperates with the other mould carrier element (4, 3) to lock the mould carrier elements (3, 4) and wherein the locking device (10) comprises a mobile actuation element (14), the movement of which is coupled at least temporarily with a movement of the locking element (16), the actuation element or locking element (16) being mobile between at least two prespecified positions (B1, B2),
**characterised in that**
the locking device (10) comprises besides a stationary guide cam that is in any way provided an additional guide device (20) which is arranged on the blow moulding arrangement (1) and cooperates with the locking element (12) or actuation element (14) such that the locking element (12) or actuation element (14) can be forced into exactly one of the two positions (B1, B2) depending on the position of the actuation element, so that it can be ensured that the locking device (10) is always in a defined state, i.e. fully locked or unlocked, wherein the guide device (20) has a curve device (22) with a curved outer surface (26), the movement of which is coupled with a movement of the actuation element (14).

2. Blow moulding arrangement according to claim 1,
characterised that
in one of the two positions (B1) of the actuation element (14), the mould carrier elements are in a locked state and in the other of the two positions (B2) of the actuation element (14), the mould carrier elements (3, 4) are in an unlocked state.

3. Blow moulding arrangement according to claim 1,
**characterised in that**
a position of the curve device (22) can be modified in relation to the actuation element (14).

4. Blow moulding arrangement according to claim 1,
**characterised in that**
the curve device (22) has at least two curve elements (32, 34), the relative position of which can be modified relative to each other.

5. Blow moulding arrangement according to claim 1,
**characterised in that**
the guide device (20) has a force exertion element (24) which contacts the curve device (22).

6. Blow moulding arrangement according to claim 5,
**characterised in that**
the force exertion element (24) exerts a force on the curve device (22) with a component standing perpendicular to the outer surface (26) of the curve device (22).

7. Blow moulding arrangement according to at least one of the preceding claims 1 to 6,
**characterised in that**
the outer surface (26) has two dishes (26a, 26b) which are spaced apart from each other and which can be contacted by the force exertion element (24), wherein the actuation element (14) is in the first position (B1) when the force exertion element (24) is arranged in the first dish (26a), and the actuation element (14) is in the second position (B2) when the force exertion element (24) is arranged in the second dish (26b).

8. Blow moulding arrangement according to at least one of the preceding claims 5 to 7,
**characterised in that**
the force exertion element (24) is arranged on a swivelable lever (40).

9. Blow moulding arrangement according to at least one of the preceding claims,
**characterised in that**
the locking device has an actuator device (18) which is mobile together with the actuation element (14) and cooperates with a sloping surface of the locking element (12) such that by movement of the actuator, a movement of the locking element (12) is effected.

## Revendications

1. Installation de moulage par soufflage (1) pour la transformation de préformes en matière plastique pour former des récipients en matière plastique, comportant un premier élément de support de moule (3) et un deuxième élément de support de moule (4) pivotant autour d'un axe de liaison (X) par rapport au premier élément de support de moule (3), les éléments de support de moule (3, 4) coopérant l'un avec l'autre de manière à former par leur espace intérieur une cavité (5) dans un état de fermeture de l'installation de moulage par soufflage (1), dans laquelle les préformes en matière plastique peuvent être expansées pour former des récipients en matière plastique, et comportant un dispositif de verrouillage (10) qui verrouille le premier élément de support de moule (3) par rapport au deuxième élément de support de moule (4) pour maintenir l'installation de moulage par soufflage (1) au moins temporairement dans un état de fermeture, le dispositif de verrouillage (10) comportant au moins un élément de verrouillage (16) disposé sur un élément de support de moule (3, 4), lequel est mobile et coopère avec l'autre élément de support de moule (4, 3) pour le verrouillage des éléments de support de moule (3, 4), et le dispositif de verrouillage (10) comportant un élément d'actionnement (14) mobile dont le mouvement est au moins temporairement accouplé à un mouvement de l'élément de verrouillage (16), l'élément d'actionnement ou l'élément de verrouillage (16) étant déplaçable au moins entre deux positions (B1, B2) données,
**caractérisée en ce que**
le dispositif de verrouillage (10) comporte, en plus d'une came de guidage fixe étant prévue de toute façon, un dispositif de guidage (20) complémentaire disposé sur l'installation de moulage par soufflage (1), lequel coopère avec l'élément de verrouillage (12) ou l'élément d'actionnement (14) de telle manière que l'élément de verrouillage (12) ou l'élément d'actionnement (14) peuvent être contraints précisément vers une des deux positions (B1, B2) en fonction de la position de l'élément d'actionnement, de sorte qu'il est possible de s'assurer que le dispositif de verrouillage (10) est toujours dans un état défini, c'est-à-dire entièrement verrouillé ou déverrouillé, dans lequel le dispositif de guidage (20) comprend un dispositif à came (22) ayant une surface extérieure incurvée (26) dont le mouvement est couplé à un mouvement de l'élément d'actionnement (14).

2. Installation de moulage par soufflage selon la revendication 1,
**caractérisée en ce que**
dans une des deux positions (B1) de l'élément d'actionnement (14), les éléments de support de moule sont dans un état de verrouillage, et **en ce que** les éléments de support de moule (3, 4) sont dans un état de déverrouillage dans l'autre des deux positions (B2) de l'élément d'actionnement (14).

3. Installation de moulage par soufflage selon la revendication 1,
**caractérisée en ce qu'**
une position du dispositif de came (22) peut être modifiée par rapport à l'élément d'actionnement (14).

4. Installation de moulage par soufflage selon la revendication 1,
**caractérisée en ce que**
le dispositif de came (22) comporte au moins deux éléments de came (32, 34) dont la position relative l'un par rapport à l'autre peut être modifiée.

5. Installation de moulage par soufflage selon la revendication 1,
**caractérisée en ce que**
le dispositif de guidage (20) comporte un élément d'exercice de force (24) qui contacte le dispositif de came (22).

6. Installation de moulage par soufflage selon la revendication 5,
**caractérisée en ce que**
l'élément d'exercice de force (24) exerce une force sur le dispositif de came (22), ladite force présentant une composante perpendiculaire à la surface extérieure (26) du dispositif de came (22).

7. Installation de moulage par soufflage selon au moins une des revendications 1 à 6,
**caractérisée en ce que**
la surface extérieure (26) présente deux échancrures (26a, 26b) espacées l'une de l'autre pouvant contacter l'élément d'exercice de force (24), l'élément d'actionnement (14) se trouvant dans la première position (B1) quand l'élément d'exercice de force (24) est disposé dans la première échancrure (26a), et l'élément d'actionnement (14) se trouvant dans la deuxième position (B2) quand l'élément d'exercice de force (24) est disposé dans la deuxième échancrure (26b).

8. Installation de moulage par soufflage selon au moins une des revendications 5 à 7,
**caractérisée en ce que**
l'élément d'exercice de force (24) est disposé sur un levier pivotant (40).

9. Installation de moulage par soufflage selon au moins une des revendications précédentes,
**caractérisée en ce que**
le dispositif de verrouillage (10) comporte un organe de réglage (18) déplaçable avec l'élément d'actionnement (14), lequel coopère avec une surface inclinée de l'élément de verrouillage (12) de telle manière qu'un mouvement de l'organe de réglage provoque un mouvement de l'élément de verrouillage (12).
